# EUROPEAN PATENT SPECIFICATION

(11) **EP 3 162 534 B1**
(45) Date of publication and mention of the grant of the patent: **26.08.2020**
(21) Application number: 15192130.1
(22) Date of filing: 29.10.2015
(51) Int. Cl.: B29C 59/02, B29C 41/20, B29C 45/14

(54) **METHOD FOR PRODUCING A PLASTIC SURFACE WITH AN INTEGRATED DECORATION**
VERFAHREN ZUR HERSTELLUNG EINER KUNSTSTOFFOBERFLÄCHE MIT EINER INTEGRIERTEN DEKORATION
PROCÉDÉ DE PRODUCTION D'UNE SURFACE EN PLASTIQUE AVEC UNE DÉCORATION INTÉGRÉE

(43) Date of publication of application: 03.05.2017
(73) Proprietor: SMP Deutschland GmbH, 79268 Bötzingen (DE)
(72) Inventor: Vidal, Antonio, 08184 Palau de Plegamans (ES); Macias, Alberto Manchón, 08233 Vacarisses (ES)
(74) Representative: Westphal, Mussgnug & Partner Patentanwälte mbB

(56) References cited:
- EP-A1- 2 025 490
- WO-A1-94/25249
- WO-A1-97/03466
- DE-A1-102013 107 459
- US-A1- 2010 104 828
- US-A1- 2012 292 817

## Description

The invention relates to a method for producing a plastic surface with integrated decoration, especially with decorative elements such as emblems, patterns, engraving effects, trims and other types of decoration.

Many of the surfaces we see every day are made from plastics. For example, many of the interior surfaces we see when looking around in a car are plastic surfaces, as e.g. dashboard, door panels and other covers and linings are plastic parts. Accordingly, there is a strong desire to provide decorations on this class of surfaces.

Digital printing is a technology that is very well suited for the creation of decorations, because it allows for the creation of highly precise, even photorealistic images on various materials at least on two-dimensional, flat surfaces. However, flat surfaces are the exception rather than the rule in many applications, e.g. for the above-mentioned applications in the automotive industry. Therefore, processes have been developed to transfer a digital image to the plastic surface of a structure.

A first of these processes which is described e.g. in DE 10 2004 049 592 relies on adapting a two-dimensional film with the digitally printed image to the desired shape, e.g. by thermoforming, and backmoulding it. However, this process involves a transformation of the two-dimensional film which leads to a deformation of the image during the production process. Accordingly, a geometrical transformation of the motive that is printed will occur, which may involve local stretching and other types of distortion. This in turn affects not only the motive itself, which must be printed on the two-dimensional film in a shape that leads to the desired motive after the distortion has occurred, but leads to problems because typically in digital printing the images are composed of dots of ink arranged next to each other. The distortion, however, leads on the one hand to a situation in which the distance between neighbouring dots changes, which influences e.g. the colour impression. Furthermore, the area of the dot which is covered by a given amount of ink changes, which adds to further changes of the visual impression, e.g. the colour perceived by an observer.

A second type of approach involves direct application of the digital print, typically by an ink jet printer, onto the plastic surface, but faces similar problems. The reason for this is that the distance between a three-dimensional surface and the print head of the digital printer will typically vary, leading to given amounts of ink covering different areas and thus different perception of the respective dot. In addition, if the surface on which a given dot is placed is not orthogonal to the direction in which the ink is propagating, the shape of the obtained dot may no longer be circular, leading to further undesired effects.

Other related approaches are e.g. In-Mould-Labeling techniques, as described e.g. on the Website http://www.sumitomo-shi-demag.eu and In-Mould Graining techniques, as described e.g. in the article "Sophisticated Skin Design" by Franz Rausch and Richard Haslinger, Kunststoffe International 10/2014, Carl Hanser Verlag, München.

EP 2 025 490 A1 discloses a plastic product comprising a lenticular insert and a plastic wall.

WO97/03466 discloses an integrated circuit chip card and a method and system for the manufacture of same, wherein an integrated circuit chip card is made by a plurality of lamina and a chip module cavity is formed.

WO94/25249 discloses a method of making a door panel with integrated bolster.

Therefore, the need to provide an improved method for producing a plastic surface with integrated decoration which is easy, convenient and cost efficient and still avoids negative influence on the decoration persist. The task of this invention, which is solved by a method with the features of claim 1, is to provide such an improved method.

The Method for producing a plastic surface with integrated decoration according to this invention comprises the steps of
- digitally printing the decoration onto a substrate to form a decorated substrate with a printed side,
- modifying the thickness of the first decorated substrate either on the printed side or on the side to be printed in such a way that the thickness of the thus obtained modified decorated substrate decreases towards the rim of the modified decorated substrate,
- placing the modified decorated substrate in the cavity of a mould with the printed side facing the mould, and
- forming a thermoplastic elastomer foil in the cavity of the mould to obtain a plastic surface in which the modified decorated substrate is integrated.

The step of digitally printing the decoration onto a substrate can be performed using any digital printing technique. Most favoured is the use of ink jet printing, but various laser printing techniques including direct recording on a sheet metal substrate with a laser is also possible. As a substrate, sheets or plates of metal or plastic can be used, but at least when ink-jet techniques are applied, the preferred substrate material is a plastic foil because of the convenience of printing on this type of material.

Whereas the steps of placing a decorated substrate in the cavity of a mould, and forming a thermoplastic elastomer foil in the cavity of the mould are known from the art in the context of In-Mould-Labeling and In-Mould-Graining techniques and can be performed using any of the standard techniques known in the art, a key step for this invention is the step of modifying the thickness of the the first decorated substrate either on the printed side or on the side to be printed in such a way that the thickness of the thus obtained modified decorated substrate decreases towards the rim of the modified decorated substrate.

Due to such a modification of the thickness profile, which is preferredly performed after the decoration has been applied to the substrate by digital printing, but can also be performed before the digital printing, when the modified decorated substrate is placed in the cavity of a mould with the printed side facing the mould a gap remains in the region of the rim. This gap is filled during creation of the thermoplastic elastomer foil by the thermoplastic elastomer, so that the obtained thermoplastic elastomer foil actually encompasses the region of the modified decorated substrate in which the thickness of the substrate is reduced and thus fixes it in place. To obtain the best results, the thickness transition region towards the rim should have a curved, preferably convex surface and no edges.

Preferably, the region of the modified decorated substrate that is to be seen for purpose of decoration the should not be encompassed by the thermoplastic elastomer foil, which can e.g. be achieved if the thickness in this region is constant or adapted to the shape of the mould in the region in which the modified decorated substrate is fixed.

As described above, in principle it is possible to modify parts of the sequence in which these steps are performed. More precisely, whereas the third and fourth step always occur in this order, at least for some substrates, e.g. sheet metal, the modification of the thickness can be performed on the side to be printed, i.e. on the side on which the decoration will be applied by digital printing after the thickness modification has been performed.

For the sake of completeness, it should be also be added that preferably after placing the modified decorated substrate into the mould it is fixed in that position. Any known technique can be used for this purpose, specifically e.g. electrostatic force, suctioning/application of vacuum or, of metallic components are present in the modified decorated substrate, magnetic force.

As an optional additional step, the thus created surface with integrated digitally printed created may be stabilized by foaming from the rear side, e.g. using a polyurethane foam. This step can also occur as part of the formation of the plastic part whose surface is formed by the thermoplastic elastomer foil with integrated decoration.

The preferred thermoplastic elastomer used for forming the foil is a thermoplastic polyolefin or thermoplastic polyolefin blend (TPO) because of their excellent demoulding behaviour and because they do not emit corrosive substances when heated.

Whereas in general when sheet metal or sheet plastic material with a thickness of several mm are used, the thickness reduction may be obtained by removing some of the material near the rim, e.g. using mechanical methods, in a preferred embodiment of the method, the thickness of the decorated substrate is modified by adding varying amounts of transparent material on top of the decorated substrate, i.e. onto the decorated side.

A highly preferred way to do so involves the addition of a transparent layer of aliphatic polyurethane to the printed side, wherein the thickness of said layer decreases towards the rim of the decorated substrate. The preferred maximum thickness of the transparent layer is about 4mm to 5mm.

A transparent layer of aliphatic polyurethane can be obtained very easily by simply pouring this material in its liquid state onto the decorated substrate. The desired decrease of the thickness in the rim region and relatively constant thickness in the region in which the decoration is to be seen are created automatically by the surface tension of the material which governs the shape of the surface of the liquid on the decorated substrate.

As mentioned previously, preferably the decorated substrate comprises a first printed foil. However, even if covered by a layer of transparent aliphatic polyurethane, depending on the conditions under which the thermoplastic elastomer foil is formed an undesired deformation of the foil, e.g. formation of waves thereon, can occur, which can be avoided if the printed foil is attached to a support, which can be done before or after the digital printing and before or after modifying the thickness, but is preferably done before the substrate is placed in the cavity of the mould.

If furthermore the printed foil is at least partly transparent and the support is at least partly transparent, by attaching a second printed foil on the side of the support opposite of the side of the support to which the first printed foil is attached it is possible to add to the complexity of the decorative effects that can be achieved.

The attachment between decorated substrate and thermoplastic elastomer foil can be improved further if an adhesive is applied at least to the surface of the modified decorated substrate that faces away from the mould before the thermoplastic elastomer foil is formed to improve contact between the foil and the modified decorated structure. If TPO foils are created as thermoplastic elastomer foil, preferably the adhesive is based on or comprises either acrylic groups or blocked isocyanate groups.

In order to avoid the formation of air bubbles, it is advantageous if textile material is placed on the side of the modified decorated structure that faces away from the mould. A possible material is a tissue support with little contraction, such as a textile cotton with polyester.

In order to achieve decorations that can be lit from behind, in a preferred embodiment of the method the modified decorated substrate is made in such a way that it is at least partly transparent and wherein means for illumination are placed in the mold on top of the modified decorated substrate. In this context, the word "transparent" is to be interpreted in such a way that it is applicable to structures that transmit only light from a given wavelength region, thus transforming a white light beam entering the transparent region of the modified decorated substrate into a colored light beam.

Highly suitable means for illumination to be used are LED strips.

It should be noted, however, that at least in principle it is also possible to achieve such effects by making the modified decorated substrate in such a way that it is at least partly transparent, modification of created the thermoplastic elastomer foil in the region in which it covers the decorated substrate to make it at least partly transparent, e.g. by providing openings therein and arranging the means for illumination on top of this region of the thermoplastic elastomer foil.

Next, the invention is explained in some more detail using figures that show possible embodiments. More precisely, the figures show:
- Fig. 1:: A first plastic part with a surface with integrated decoration as obtainable by use of a method in accordance with the invention,
- Fig. 2:: a detail of figure 1 showing the achieved integration,
- Fig. 3:: A second plastic part with a surface with integrated decoration as obtainable by use of a method in accordance with the invention,
- Fig. 4:: a detail of figure 3 showing the achieved integration,
- Fig. 5:: a cross section through a plastic part with a surface with integrated decoration as obtainable by use of a method in accordance with the invention,
- Fig. 6:: a cross section through a first variant of a modified decorated substrate, and
- Fig. 7:: a cross section through a second variant of a modified decorated substrate.

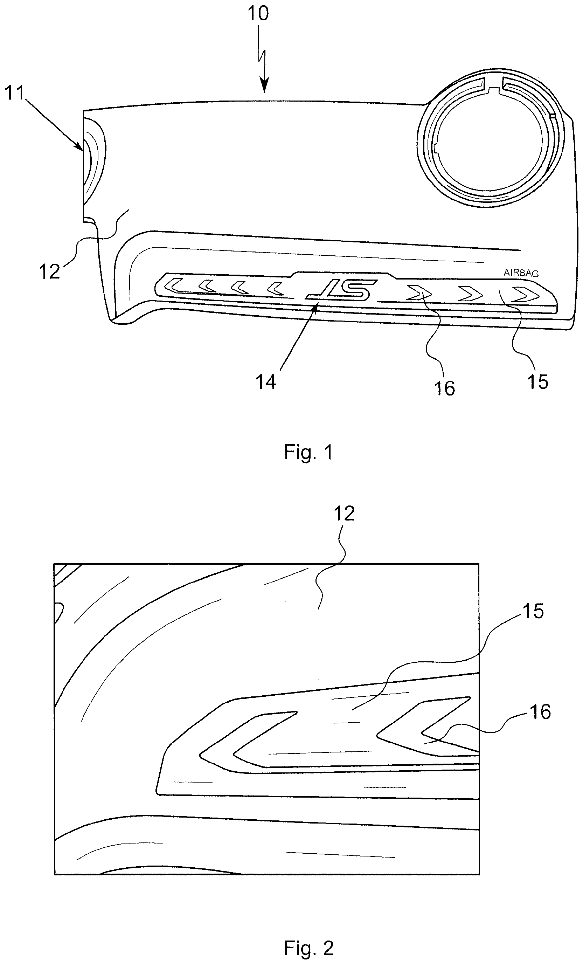

Figure 1 shows a first plastic part 10 with a plastic surface 11 formed by a thermoplastic elastomer foil 12 with integrated decoration 13 as obtainable by use of a method in accordance with the invention. In this example, the integrated decoration 13 is a modified decorated substrate 14 formed by a metal sheet 15 onto which an image 16 has been printed using digital printing and whose thickness is reduced towards the rim of the modified decorated substrate 14 by reduction of the thickness of the the metal sheet, e.g. by machining or etching, in a region outside the digitally printed image. It should be noted that the region of reduced thickness is not visible in Figure 1, because it is encompassed by the thermoplastic elastomer foil 12. Figure 2 shows a detail of figure 1 which illustrates how smooth and close an integration of the integrated decoration is achievable by application of the method of this invention.

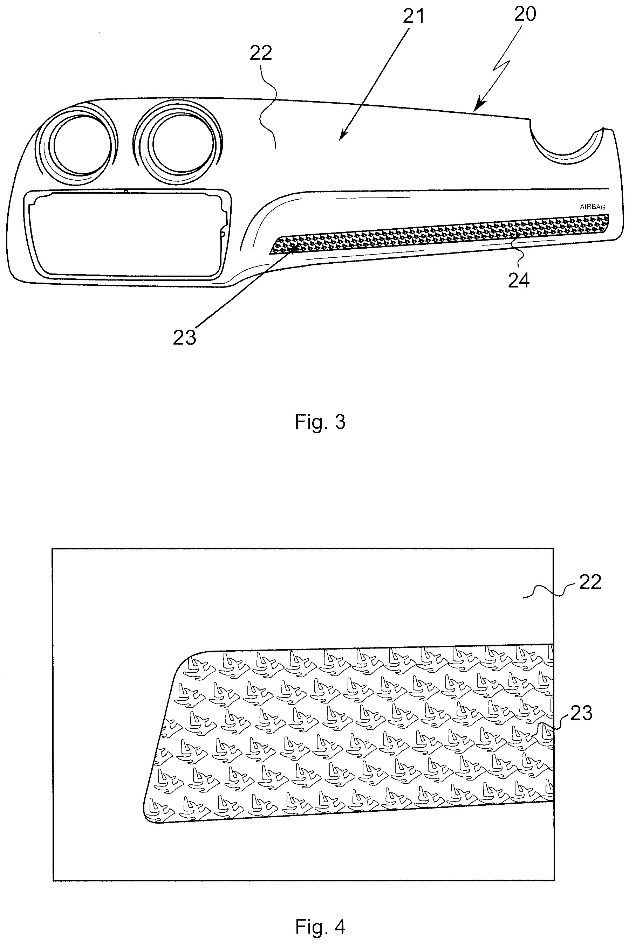

Figure 3 shows a second plastic part 20 with a plastic surface 21 formed by a thermoplastic elastomer foil 22 with integrated decoration 23 as obtainable by use of a method in accordance with the invention. In this example, the integrated decoration 23 is a decorated substrate 24 comprising a plastic foil onto which an image has been printed using digital printing. The thickness of the modified decorated substrate 24 which has been modified in such a way that its thickness is reduced towards the rim of the decorated substrate 24 in a region outside the digitally printed image by deposition of a suitably shaped polyurethane layer onto the plastic foil. It should be noted that the region of reduced thickness is not visible in Figure 3, because it is encompassed by the thermoplastic elastomer foil 22. Figure 4 shows a detail of Figure 3 which illustrates how smooth and close an integration of the integrated decoration is achievable by application of the method of this invention.

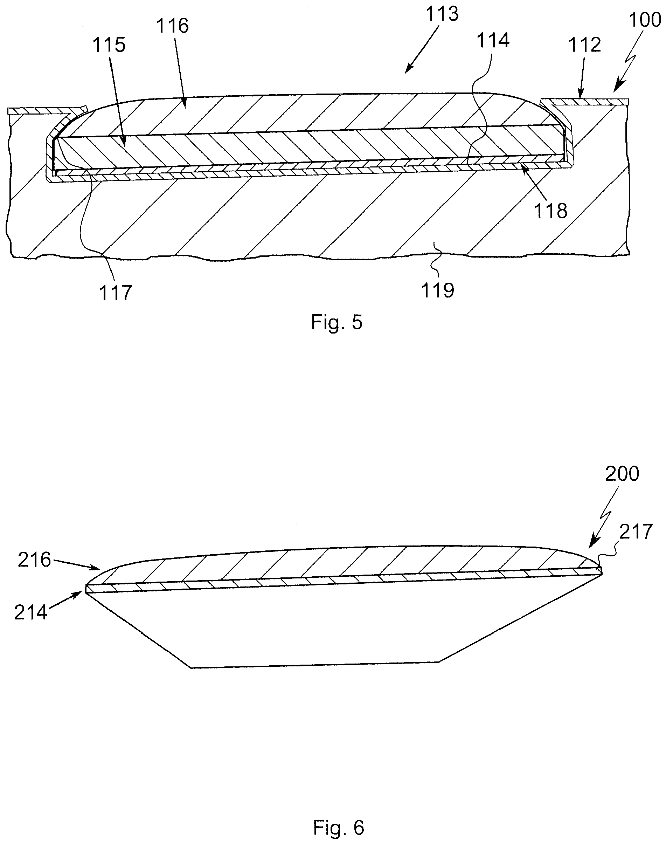

Figure 5 shows a cross section through a plastic part 100 with a plastic surface formed by a thermoplastic elastomer foil 112 with integrated decoration 113 as obtainable by use of a method in accordance with the invention. The integrated decoration 113 is formed by decorated substrate realized as a plastic foil 114 onto which a digital image has been printed. The plastic foil 114 has been placed on a support 115 and a layer of transparent aliphatic polyurethane 116 has been poured onto the plastic foil 114 to obtain the modified decorated substrate whose thickness is reduced towards the rim 117 of the decorated substrate. As a consequence, the thermoplastic elastomer foil 112 encompasses the modified decorated substrate und and fixes it in place. To add to this fixing, an adhesive layer 118 that may e.g. be based on or comprise either acrylic groups or blocked isocyanate groups if the thermoplastic elastomer foil 112 is a TPO foil has been applied.

Whereas the plastic surface with integrated decoration 113 formed by thermoplastic elastomer foil 112 is stable already and may be used as a surface cover that is added to a part, in the example shown in Figure 5 the plastic part whose plastic surface is formed is created by inserting polyurethane foam 119 from the rear side, thus increasing stability of the integration even further.

Figure 6 shows a cross section through a first, most basic variant of a modified decorated substrate 200, which simply comprises the printed foil 214 and a layer of transparent aliphatic polyurethane 216 which has been poured onto the plastic foil 214 to obtain the modified decorated substrate 200 whose thickness is reduced towards the rim 217 of the decorated substrate formed by the printed foil 214.

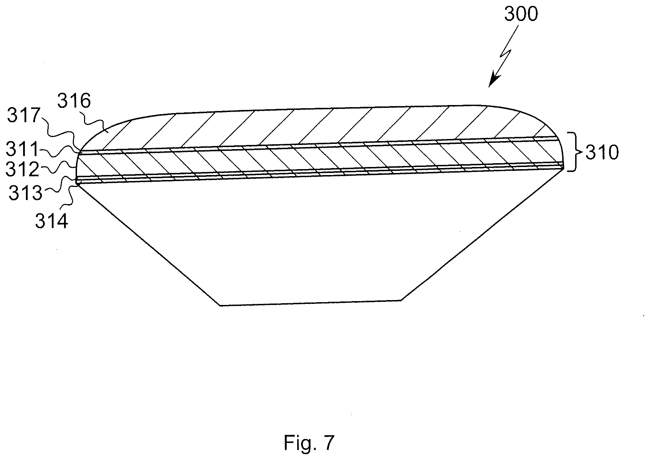

Figure 7 shows a cross section through a second, more advanced variant of a modified decorated substrate 300. The decorated substrate 310 is formed by a stack of a first partly transparent printed foil 311 supported by an at least partly transparent plastic support 312 under which a second at least partly transparent printed foil 313 is arranged which in turn is located on top of a protective layer 314. To create the modified decorated substrate 300, a layer of transparent aliphatic polyurethane 316 has been poured onto the decorated substrate 310. The thickness of the layer of transparent aliphatic polyurethane 316 is reduced towards the rim 317 of the decorated substrate.

### Reference numerals:

- 10: plastic part
- 11: plastic surface
- 12: thermoplastic elastomer foil
- 13: integrated decoration
- 14: modified decorated substrate
- 15: metal sheet
- 16: image

- 20: plastic part
- 21: plastic surface
- 22: thermoplastic elastomer foil
- 23: integrated decoration
- 24: modified decorated substrate

- 100: plastic part
- 112: thermoplastic elastomer foil
- 113: integrated decoration
- 114: plastic foil
- 115: support
- 116: transparent aliphatic polyurethane
- 117: rim
- 118: adhesive layer
- 119: polyurethane foam

- 200: modified decorated substrate
- 214: printed foil
- 216: transparent aliphatic polyurethane
- 217: rim

- 300: modified decorated substrate
- 310: decorated substrate
- 311: printed foil
- 312: plastic support
- 313: printed foil
- 314: protective layer
- 316: transparent aliphatic polyurethane
- 317: rim

## Claims

1. Method for producing a plastic surface (11,21) with integrated decoration (13,23,113) comprising the steps of
- digitally printing the decoration onto a substrate to form a decorated substrate (310) with a printed side,
- modifying the thickness of the decorated substrate (310) either on the printed side or on the side to be printed in such a way that the thickness of the thus obtained modified decorated substrate (14,24,200,300) decreases towards the rim (117,217,317) of the modified decorated substrate (14,24,200,300),
- placing the modified decorated substrate (14,24,200,300) in the cavity of a mould with the printed side facing the mould so that a gap remains in the region of the rim, and
- forming a thermoplastic elastomer foil (12,22,112) in the cavity of the mould so that the gap is filled during creation of the thermoplastic elastomer foil by the thermoplastic elastomer, in such a way that the obtained thermoplastic elastomer foil encompasses the region of the modified decorated substrate in which the thickness of the substrate is reduced and thus fixes it in place to obtain a plastic surface (11,21) in which the modified decorated substrate (14,24,200,300) is integrated.

2. The method of claim 1, wherein the thermoplastic elastomer used for forming the thermoplastic elastomer foil (12,22,112) is a thermoplastic polyolefin or thermoplastic polyolefin blend.

3. The method of claim 1 or 2, wherein the thickness of the decorated substrate (310) is modified by adding a layer of transparent aliphatic polyurethane (116,216,316) to the printed side, wherein the thickness of said layer of transparent aliphatic polyurethane (116,216,316) decreases towards the rim (117,217,317) of the decorated substrate (310).

4. The method of claim 3, wherein the maximum thickness of the layer of transparent aliphatic polyurethane (116,216,316) is about 4 to 5mm.

5. The method of claim 3 or 4, wherein the layer of transparent aliphatic polyurethane (116,216,316) is added by pouring said material onto the printed side of the decorated substrate (310).

6. The method of one of claims 1 to 5, wherein the decorated substrate (310) comprises a first printed foil (214,311).

7. The method of claim 6, further comprising the step of attaching the first printed foil (311) to a support (312).

8. The method of claim 7, wherein the first printed foil (311) is at least partly transparent, the support (312) is at least partly transparent and a second printed foil (313) is attached on the side of the support (312) opposite of the side of the support (312) to which the first printed foil (311) is attached.

9. The method of one of claims 1 to 8, wherein an adhesive layer (118) is applied at least to the surface of the modified decorated substrate (14,24,200,300) that faces away from the mould before the thermoplastic elastomer foil (12,22,112) is formed to improve contact between the thermoplastic elastomer foil (12,22,114) and the modified decorated structure (14,24,200,300).

10. The method of claims 2 and 9, wherein the adhesive layer (118) is based on or comprises either acrylic groups or blocked isocyanate groups.

11. The method of one of claims 1 to 10, wherein a textile is placed on the side of the modified decorated substrate (14,24,200,300) that faces away from the mould.

12. The method of one of claims 1 to 11, wherein the modified decorated substrate (14,24,200,300) is at least partly transparent and wherein means for illumination are placed in the mold on top of the modified decorated substrate (14,24,200,300).

## Patentansprüche

1. Verfahren zur Herstellung einer Kunststoffoberfläche (11, 21) mit integrierter Dekoration (13, 23, 113), umfassend die folgenden Schritte:
- Digitales Drucken der Dekoration auf ein Substrat, um ein dekoriertes Substrat (310) mit einer bedruckten Seite zu bilden,
- Modifizieren der Dicke des dekorierten Substrats (310) entweder auf der bedruckten Seite oder auf der zu bedruckenden Seite in der Weise, dass sich die Dicke des so erhaltenen modifizierten dekorierten Substrats (14, 24, 200, 300) zum Rand (117, 217, 317) des modifizierten dekorierten Substrats (14, 24, 200, 300) hin verringert,
- Anordnen des modifizierten dekorierten Substrats (14, 24, 200, 300) im Hohlraum einer Form, wobei die bedruckte Seite der Form zugewandt ist, so dass im Bereich des Randes ein Spalt verbleibt, und
- Bilden einer thermoplastischen Elastomerfolie (12, 22, 112) im Hohlraum der Form, so dass der Spalt während der Erzeugung der thermoplastischen Elastomerfolie durch das thermoplastische Elastomer gefüllt wird, so dass die erhaltene thermoplastische Elastomerfolie den Bereich des modifizierten dekorierten Substrats, in dem die Dicke des Substrats verringert ist, umfasst und somit ortsfest fixiert, um eine Kunststoffoberfläche (11, 21) zu erhalten, in die das modifizierte dekorierte Substrat (14, 24, 200, 300) integriert ist.

2. Verfahren nach Anspruch 1, wobei das zum Bilden der thermoplastischen Elastomerfolie (12, 22, 112) verwendete thermoplastische Elastomer ein thermoplastisches Polyolefin oder eine thermoplastische Polyolefinmischung ist.

3. Verfahren nach Anspruch 1 oder 2, wobei die Dicke des dekorierten Substrats (310) durch Hinzufügen einer Schicht aus transparentem aliphatischen Polyurethan (116, 216, 316) auf die bedruckte Seite modifiziert wird, wobei sich die Dicke der Schicht aus transparentem aliphatischen Polyurethan (116, 216, 316) zum Rand (117, 217, 317) des dekorierten Substrats (310) hin verringert.

4. Verfahren nach Anspruch 3, wobei die maximale Dicke der Schicht aus transparentem aliphatischen Polyurethan (116, 216, 316) etwa 4 bis 5 mm beträgt.

5. Verfahren nach Anspruch 3 oder 4, bei dem die Schicht aus transparentem aliphatischem Polyurethan (116, 216, 316) durch Gießen des Materials auf die bedruckte Seite des dekorierten Substrats (310) hinzugefügt wird.

6. Verfahren nach einem der Ansprüche 1 bis 5, wobei das dekorierte Substrat (310) eine erste bedruckte Folie (214, 311) aufweist.

7. Verfahren nach Anspruch 6, weiterhin umfassend den Schritt des Anbringens der ersten bedruckten Folie (311) an einem Träger (312).

8. Verfahren nach Anspruch 7, wobei die erste bedruckte Folie (311) zumindest teilweise transparent ist, der Träger (312) zumindest teilweise transparent ist und eine zweite bedruckte Folie (313) auf die Seite des Trägers (312) aufgebracht wird, die der Seite des Trägers (312), an der die erste bedruckte Folie (311) angebracht ist, entgegengesetzt ist.

9. Verfahren nach einem der Ansprüche 1 bis 8, bei dem eine Klebstoffschicht (118) zumindest auf die Oberfläche des modifizierten dekorierten Substrats (14, 24, 200, 300) aufgebracht wird, die der Form abgewandt ist, bevor die thermoplastische Elastomerfolie (12, 22, 112) gebildet wird, um den Kontakt zwischen der thermoplastischen Elastomerfolie (12, 22, 114) und der modifizierten dekorierten Struktur (14, 24, 200, 300)zu verbessern.

10. Verfahren nach den Ansprüchen 2 und 9, wobei die Klebstoffschicht (118) entweder auf Acrylgruppen oder blockierten Isocyanatgruppen basiert oder diese aufweist.

11. Verfahren nach einem der Ansprüche 1 bis 10, bei dem eine Textile auf der der Form abgewandten Seite des modifizierten dekorierten Substrats (14, 24, 200, 300) angeordnet wird.

12. Verfahren nach einem der Ansprüche 1 bis 11, bei dem das modifizierte dekorierte Substrat (14, 24, 200, 300) zumindest teilweise transparent ist und bei dem Mittel zur Beleuchtung in der Form oben auf dem modifizierten dekorierten Substrat (14, 24, 200, 300) angeordnet werden.

## Revendications

1. Procédé pour fabriquer une surface en plastique (11, 21) avec un décor intégré (13, 23, 113) consistant à :
- imprimer en impression numérique le décor sur un support pour former un support décoré (310) avec un côté imprimé,
- modifier l'épaisseur du support décoré (310) soit sur le côté imprimé, soit sur le côté à imprimer de façon que l'épaisseur du support décoré modifié (14, 24, 200, 300) ainsi obtenu diminue vers le bord (117, 217, 317) du support décoré modifié (14, 24, 200, 300),
- placer le support décoré, modifié (14, 24, 200, 300) dans la cavité d'un moule avec la face imprimée tournée vers le moule de manière qu'il subsiste un intervalle dans la région du bord, et
- former une feuille d'élastomère thermoplastique (12, 22, 112) dans la cavité du moule de façon à remplir l'intervalle pendant la réalisation de la feuille d'élastomère thermoplastique avec l'élastomère thermoplastique de façon que la feuille d'élastomère thermoplastique obtenue englobe la région du support décoré, modifié, dans laquelle l'épaisseur du support est réduite et le fixe ainsi en place pour obtenir une surface en plastique (11, 21) intégrant le support décoré, modifié (14, 24, 200, 300).

2. Procédé selon la revendication 1,
selon lequel
l'élastomère thermoplastique utilisé pour réaliser la feuille d'élastomère thermoplastique (12, 22, 112) est un polyoléfine thermoplastique ou un mélange de polyoléfines thermoplastiques.

3. Procédé selon la revendication 1 ou 2,
dans lequel
l'épaisseur du support décoré (310) est modifiée par l'ajout d'une couche de polyuréthane aliphatique transparent (116, 216, 316) sur le côté imprimé, et
l'épaisseur de cette couche de polyuréthane aliphatique transparent (116, 216, 316) diminue vers le bord (117, 217, 317) du support décoré (310).

4. Procédé selon la revendication 3,
dans lequel
l'épaisseur maximale de la couche de polyuréthane aliphatique transparent (116, 216, 316) est de l'ordre de 4-5 mm.

5. Procédé selon la revendication 3 ou 4,
dans lequel
la couche de polyuréthane aliphatique transparent (116, 216, 316) est ajoutée en versant la matière sur le côté imprimé du support décoré (310).

6. Procédé selon l'une des revendications 1 à 5,
dans lequel
le support décoré (310) comprend un premier film imprimé (214, 311).

7. Procédé selon la revendication 6,
consistant en outre à
fixer la première feuille imprimée (311) sur un support (312).

8. Procédé selon la revendication 7,
selon lequel
la première feuille imprimée (311) est au moins partiellement transparente,
le support (312) est au moins partiellement transparent, et
une seconde feuille imprimée (313) est fixée sur le côté du support (312) opposé au côté du support (312) auquel est fixée la première feuille imprimée (311).

9. Procédé selon l'une des revendications 1 à 8,
selon lequel
une couche adhésive (118) est appliquée au moins sur la surface du support décoré, modifié (14, 24, 200, 300) qui n'est pas tournée vers le moule avant de former la feuille d'élastomère thermoplastique (12, 22, 112) pour améliorer le contact entre la feuille d'élastomère thermoplastique (12, 22, 112) et la structure décorée, modifiée (14, 24, 200, 300).

10. Procédé selon les revendications 2 et 9,
selon lequel
la couche adhésive (118) comprend des groupes acryliques, ou des groupes isocyanate bloqués.

11. Procédé selon l'une des revendications 1 à 10,
selon lequel
un textile est placé sur le côté du support décoré, modifié (14, 24, 200, 300) non tourné vers le moule.

12. Procédé selon l'une des revendications 1 à 11,
selon lequel
le support décoré, modifié (14, 24, 200, 300) est au moins partiellement transparent et
des moyens d'éclairage sont placés dans le moule sur le dessus du support décoré, modifié (14, 24, 200, 300).
